Europäisches Patentamt

European Patent Office

Office européen des brevets

(11) Veröffentlichungsnummer: **0 188 637**
**B1**

# (12) EUROPÄISCHE PATENTSCHRIFT

(45) Veröffentlichungstag der Patentschrift:
01.06.88

(21) Anmeldenummer: 85100496.0

(22) Anmeldetag: 18.01.85

(51) Int. Cl.⁴: **C 04 B 35/52**

(54) Verfahren zum Herstellen von Glaskohlenstoffkörpern.

(43) Veröffentlichungstag der Anmeldung:
30.07.86 Patentblatt 86/31

(45) Bekanntmachung des Hinweises auf die Patenterteilung:
01.06.88 Patentblatt 88/22

(84) Benannte Vertragsstaaten:
**DE FR GB IT SE**

(56) Entgegenhaltungen:
**EP - A - 0 089 669**
**DE - A - 2 829 234**
**DE - B - 2 325 163**
**GB - A - 921 236**
**GB - A - 956 452**
**GB - A - 1 312 258**
**US - A - 4 241 104**
**US - A - 4 412 675**

(73) Patentinhaber: **SIGRI GmbH,**
**Werner-von-Siemens-Strasse 18, D-8901 Meitingen (DE)**

(72) Erfinder: **Tetzlaff, Ernst, Prof. Dr. Ing.,**
**Virchow-Strasse 2, D-7920 Heidenheim (DE)**

**Beschreibung**

Die Erfindung betrifft ein Verfahren zum Herstellen von Glaskohlenstoffkörpern, bei welchem aus Thermoplasten bestehende Formlinge stabilisiert und durch Erhitzen in inerter Atmosphäre carbonisiert werden.

Zur Herstellung von Kohlenstoff- und Graphitkörpern werden im allgemeinen gemahlene Kokse oder andere im wesentlichen aus Kohlenstoff bestehende Feststoffe mit einem kohlenstoffhaltigen Binder gemischt, das Gemisch wird geformt und der Formling zur Überführung des Binders in einem die Kohlenstoffkörner verbindenden Koks erhitzt. Die Körper sind polygranular, in der Regel anisotrop und als Folge der Binderpyrolyse mehr oder weniger porös. Es hat nicht an Versuchen gefehlt, gleichförmigere, im wesentlichen nur eine einzige Phase enthaltende Körper herzustellen. Beispielsweise ist vorgeschlagen worden, duroplastische Kunststoffe zu härten und zu carbonisieren, das Produkt zu zerkleinern, mit einem Phenolharzbinder zu mischen und wie üblich zu einem Kohlenstoffkörper zu verarbeiten. Trotz des grösseren Aufwands bleibt bei diesem Verfahren die zweiphasige Struktur des Kohlenstoffkörpers, gekennzeichnet durch den primären Harzkoks und den sekundären Binderkoks, im wesentlichen erhalten. Einen «monogranularen» Kohlenstoffkörper erhält man aus duroplastischen Kunststoffen, die zu Formlingen verarbeitet und nach thermischer oder katalytischer Härtung, durch Erhitzen auf etwa 1000 °C carbonisiert werden. Das Produkt, das eine grössere Festigkeit als «polygranularer» Kohlenstoff hat und im wesentlichen gegen Gase und Flüssigkeiten impermeabel ist, wird wegen der glasähnlichen Bruchflächen als Glaskohlenstoff oder glasartiger Kohlenstoff bezeichnet. Grundsätzlich ist jeder duroplastische Kunststoff als Ausgangsstoff für Glaskohlenstoff geeignet, verwendet werden überwiegend Phenolharze (GB-A-956 452), Furanharze (GB-A-921 236) und Gemische dieser Stoffe in flüssiger und pulveriger Form. Zur Herstellung der Formlinge werden Flüssigharze in Formen gegossen, pulverförmige Harze durch Gesenkpressen, vorwiegend Warmpressen, geformt und die Harze durch allmähliche Steigerung der Temperatur ausgehärtet. Unter dem Begriff «Härtung» versteht man alle Kondensations- und Vernetzungsreaktionen, die den Harzkörper unschmelzbar machen, so dass die Körper in einer zweiten Verfahrensstufe ohne grössere Formänderungen in Kohlenstoff übergeführt werden können. Man erhitzt die gehärteten Formlinge zu diesem Zweck in einer inerten oder reduzierenden Atmosphäre oder im Vakuum auf etwa 800 °C oder mehr. Erhitzungsgeschwindigkeit und maximale Erhitzungstemperatur hängen im wesentlichen von Grösse und Wandstärke der Formlinge und von der vorgesehenen Verwendung des Glaskohlenstoffs ab. Üblich sind Geschwindigkeiten von etwa 1 bis 5 K/h unterhalb etwa 600 °C und von etwa 30 K/h oberhalb dieser Grenztemperatur. Die maximale Erhitzungstemperatur beträgt zweckmässig etwa 1000 °C bzw. etwa 2800 °C für «graphitierten» Glaskohlenstoff.

Ein gewichtiger Nachteil der beschriebenen Herstellung von Glaskohlenstoffkörpern ist die verglichen mit thermoplastischen Kunststoffen schlechte Formbarkeit der duroplastischen Harze. Die Formungsverfahren sind vergleichsweise aufwendig und auch kaum zur Herstellung gestreckter Körper geeignet, z.B. von Rohren, Leisten u.dgl. Zwar ist es bekannt, körnige und faserige Füllstoffe enthaltende duroplastische Massen zu extrudieren und langgestreckte Formlinge herzustellen, dieses Verfahren ist jedoch weniger für die Verarbeitung ungefüllter Harztypen geeignet. Die technisch kaum beherrschbare Streuung der Fluidität beim Extrudieren ungefüllter Duroplasten bedingt grosse Massabweichungen und führt vor allem zu einem grossen Ausschussanteil durch die Bildung von Rissen in der Carbonisierungsstufe. Durch die US-A-4 412 675 ist schliesslich bekannt, auch thermoplastische Harze zur Herstellung von Kohlenstoffkörpern zu verwenden. Da diese Harze beim Erwärmen schmelzen ist es erforderlich, die Harze vor der Carbonisierung der daraus hergestellten Körper zu vernetzen oder thermisch zu stabilisieren. Der in Form einer Spiralfeder vorliegende Harzkörper wird zu diesem Zweck im Kontakt mit Sauerstoff oder einer Lewis-Säure erhitzt. Das Ergebnis der Behandlung hängt offensichtlich von der Diffusion der Mittel in den Harzkörpern ab, dessen Dicke daher beschränkt sein muss. Wesentlich wird man das Verfahren nur zur Stabilisierung von fadenförmigen Harzkörpern verwenden können. Es wird auch vorgeschlagen, die Harzspiralen mit UV-Licht – oder einem Elektronenstrahl – zu bestrahlen und mit physikalischen Mitteln die Stabilisierung wenigstens einzuleiten. Für das Verfahren sollen zahlreiche Thermoplasten geeignet sein, wie Polyvinylchlorid, Polyacrylnitrile, Polyvinylidenchlorid, Polyvinylalkohol usw. einschliesslich einiger temperaturbeständiger Harze, wie Polyphenylenoxid, Polysulfon, Polyimid, Polyamidimid usw. Es ist nicht bekannt, ob alle der genannten Thermoplaste sich zur Herstellung von Glaskohlenstoff eignen und welche Dicke die erzeugten Körper haben.

Der Erfindung liegt daher die Aufgabe zugrunde, die Herstellung von Glaskohlenstoff aus thermoplastischen Formlingen derart zu verbessern, dass Körper grösserer Abmessung mit einer hohen Kohlenstoffausbeute erhalten werden.

Die Aufgabe wird dadurch gelöst, dass aus Thermoplasten aus der Gruppe Polyphenylenoxid, Polysulfon, Polyetheretherketone bestehende Formlinge mit wenigstens 1 MJ/kg Betastrahlen zur Stabilisierung bestrahlt und die bestrahlten Formlinge carbonisiert werden.

Die Erfindung beruht auf der überraschenden Erkenntnis, dass nicht alle thermoplastischen Kunststoffe durch Bestrahlung mit energiereicher Strahlung thermisch stabilisiert und weiter in Glaskohlenstoff übergeführt werden können. Es ist bekannt, thermoplastische Stoffe wie Polyacrylnitril durch Erhitzen in Gegenwart eines Oxidationsmittels thermisch zu stabilisieren. Die Geschwindigkeit der diffusions-kontrollierten Vernetzungsreaktion ist allerdings derart klein, dass das Verfahren ausschliesslich bei der Herstellung von Kohlenstoffasern verwendet wird, deren Filamentdurchmesser nur einige Mikrometer beträgt. Für die Herstellung von Glaskohlenstoffkörpern ist das Verfahren nicht geeignet. Durch die DE-A-2 829 234 ist es auch bekannt, zur Herstellung von faserverstärkten Verbundkörpern verwendete Epoxidharze mit einem Photopolymerisations-Katalysator und einem hitzeaktivierbaren Vernetzungsmittel zu versetzen und in dünner Schicht einer aktinischen Strahlung auszusetzen. Es bildet sich ein zähplastischer Film, der die Verstärkungsfasern umfliesst und zur thermischen Stabilisierung einer zusätzlichen thermischen Behandlung bedarf. Das bestrahlte Epoxidharz unterscheidet sich daher nicht grundsätzlich von anderen Duroplasten, besonders auch nicht im Formungsverhalten.

Für das Verfahren geeignet sind prinzipiell nur thermoplastische Kunststoffe, die aromatische Strukturanteile (Benzolringe) enthalten. Andere Thermoplaste, wie Polyvinylchlorid oder Polyvinylalkohol werden durch Bestrahlen nicht ausreichend vernetzt und schmelzen beim weiteren Erhitzen oder der Thermoplast depolymerisiert. Die meisten thermoplastischen Kunststoffe mit Benzolkernen bilden beim Bestrahlen mit energiereicher Strahlung jedoch grössere Blasen und Poren und eignen sich deshalb nur zur Herstellung von Schaumkohlenstoff und nicht für kompakten glasartigen Kohlenstoff. Diese Mängel weisen Thermoplaste aus der Gruppe Phenylenoxid, Polysulfon, Polyethersulfon und Polyetheretherketon nicht auf, die sich zudem durch eine grosse Kohlenstoffausbeute von etwa 50% auszeichnen. Die Kunststoffe werden in granulierter Form bei Temperaturen von etwa 300 °C plastifiziert und zu Rohren, Stäben, Profilen, Platten oder Folien extrudiert. Weniger gestreckte Formen wie Tiegel, Ringe, Kugeln stellt man zweckmässig durch Spritzgiessen her. Die Formbarkeit ist sehr gut.

Die Formlinge werden dann einer ionisierenden Strahlung ausgesetzt und der Kunststoff derart vernetzt, dass sie bei der nachfolgenden Carbonisierungsbehandlung nicht schmelzen oder erweichen. Verwendet werden Beta-Strahlen mit einer Energiedosis von wenigstens einem MJ/kg.

Die Strahlungsleistung ist derart zu bemessen, dass im Formling vor der Vernetzung die Erweichungstemperatur des jeweiligen Kunststoffs nicht erreicht wird. Zur Vermeidung eines übermässigen Temperaturanstiegs ist es zweckmässig, die Dosis in mehreren Stufen aufzubringen und zwischen den Bestrahlungsstufen die Temperatur der Formlinge zu senken. Die durch die Bestrahlung vernetzten unschmelzbaren Kunststoffe werden in an sich bekannter Weise durch Erhitzen in einer inerten oder reduzierenden Atmosphäre oder im Vakuum carbonisiert. Die Erhitzungsgeschwindigkeit beträgt zweckmässig unterhalb etwa 600 °C 3 bis 8 K/h, sie ist für dickwandige Formlinge etwas kleiner als für dünnwandige Körper. Die Erhitzungstemperatur sollte wenigstens 800 °C betragen.

Zur Herstellung von Glaskohlenstoffkörpern mit schaumartiger Struktur ist es von Vorteil, die Bestrahlung der Formlinge vor der vollständigen Vernetzung des Kunststoffes zu beenden und die Formlinge dann in einer inerten Atmosphäre zu erhitzen. Der Terminus «vollständige Vernetzung» beschreibt hier nicht den Reaktionsmechanismus des Kunststoffs, sondern die Fluidität des Formlinges. Formlinge, die nicht vollständig vernetzt sind, erweichen teilweise bei der Carbonisierungsbehandlung, es bilden sich mehr oder weniger grosse Poren, deren Anteil und Grösse von dem Grad der Vernetzung bestimmt werden und sich einfach durch Vorversuche bestimmen lassen. Schaumartiger Glaskohlenstoff ist wegen der ausgezeichneten Wärmedämmung besonders als thermischer Isolationsstoff für hohe Temperaturen geeignet. Nach einer anderen Ausbildung des Verfahrens werden dem thermoplastischen Kunststoff Kohlenstoffasern zugesetzt, beispielsweise in Form von Kurzschnittfasern oder Endlosgarnen, die in den Kunststoff eingemischt bzw. durch Pultrusion, Walzen, Giessen od. dgl. eingearbeitet werden. Der Faseranteil kann bis etwa 60 Vol-% betragen und man erhält Glaskohlenstoffkörper, die durch Kohlenstoffasern verstärkt sind. Derartige Körper haben eine grössere Festigkeit als unverstärkte Glaskohlenstoffkörper und werden besonders für mechanisch stärker belastete Elemente verwendet, z.B. für Lager, Federn, Bremsscheiben oder auch Düsen.

Zur Herstellung der Formlinge aus den thermoplastischen Kunststoffen sind die als Urformen bezeichneten Formverfahren geeignet. Bevorzugt wird das Formen durch Extrudieren oder Spritzgiessen. Grössere Teile werden zweckmässig vor der Vernetzungsbehandlung durch Fügen verbunden und als Einheit carbonisiert. Gleiches gilt für komplizierter geformte Teile, die durch Urformen nicht oder nur mit grossem Aufwand herstellbar sind. Ein besonders vorteilhaftes Fügeverfahren ist Stumpfschweissen mit Ultraschall.

Wesentlicher Vorteil des erfindungsgemässen Verfahrens ist die Erschliessung der technisch ausgereiften, für die Herstellung von Formlingen aus thermoplastischen Kunststoffen üblichen Verfahren und Vorrichtungen für die Herstellung von Glaskohlenstoff. Besonders gestreckte Formlinge lassen sich damit wesentlich einfacher und mit geringerem Aufwand herstellen. Grössere oder komplexere Formen erhält man aus mehreren Formlingen, die durch Schweissen oder Kleben miteinander verbunden und dann vernetzt werden.

Die Erfindung wird im folgenden anhand von Beispielen beschrieben:

Beispiel 1

Polysulfon (Handelsname Udel® P 3500) mit einem mittleren Molekulargewicht von etwa 35 000 wurde plastifiziert und Platten der Masse 91 × 15 × 4 mm gespritzt. Zur thermischen Stabilisierung des Thermoplasten wurden die Platten mit Beta-Strahlen bestrahlt; die Dosis betrug insgesamt 2 MJ/kg, die in vier Teilen aufgebracht wurde, so dass die Temperatur der Platten höchstens 120°C war. In einer strömenden Stickstoffatmosphäre wurden die Platten mit einem mittleren Gradienten von 3,7 K/h auf 1100°C erhitzt und innerhalb von 48 h auf Raumtemperatur abgekühlt. Die lineare Schwindung in den Richtungen der Kanten betrug etwa 30%, der Koksrückstand ca. 44%.

Die nach Augenschein fehlerfreien Glaskohlenstoffplatten hatten bei Raumtemperatur folgende Eigenschaften:

| | |
|---|---|
| Rohdichte | 1,46 g/cm³ |
| Biegefestigkeit | 100 MPa |
| E-Modul | 28 GPa |
| spez. elektr. Widerstand | 51 Ωμm |

Beispiel 2

Durch Extrudieren hergestellte Rohre aus Polyethersulfon (Handelsname Victrex® 300 P), mittleres Molekulargewicht etwa 20 500, mit einem Aussendurchmesser von 40 mm und einem Innendurchmesser von 32 mm, wurden mit Beta-Strahlen bestrahlt. Die Gesamtdosis, die in acht Teilstufen aufgebracht wurde, betrug 2,2 MJ/kg, die Temperatur der Rohre war bei der Bestrahlung stets kleiner als 130°C. Die Rohre wurden zur Pyrolyse des thermisch stabilisierten Thermoplasten mit einem Gradienten von etwa 2,8 K/h auf 1100°C erhitzt und dann innerhalb von 48 h auf Raumtemperatur abgekühlt. Die lineare Schwindung betrug etwa 30%, der Koksrückstand 42%.

Die Eigenschaften des Glaskohlenstoffrohrs waren wie folgt (Raumtemperatur):

| | |
|---|---|
| Rohdichte | 1,41 g/cm³ |
| spez. elektr. Widerstand | 53 Ωμm |
| Wärmeleitfähigkeit | 3,8 W/m·K |

Beispiel 3

Durch Spritzgiessen von Polyphenylenoxid mit einem Gehalt an Kohlenstoffasern von 30% – Faserlänge etwa 0,8 bis 2 mm – hergestellte Tiegel – Durchmesser 80 mm, Höhe 100 mm, Wandstärke 4 mm – wurde mit einer Dosis von 1,5 MJ/kg unterteilt in vier Stufen zur Vernetzung und thermischen Stabilisierung des Thermoplasten bestrahlt und zu dessen Carbonisierung mit einem Gradienten von etwa 4 K/h auf 1050°C erhitzt. Der Rückstand betrug ca. 58%, die lineare Schwindung etwa 25%. Der besonders schlagzähe Glaskohlenstoff hatte bei Raumtemperatur folgende Eigenschaften:

| | |
|---|---|
| Rohdichte | 1,50 g/cm³ |
| Biegefestigkeit | 140 MPa |
| E-Modul | 35 GPa |

**Patentansprüche**

1. Verfahren zum Herstellen von Glaskohlenstoffkörpern, bei welchem aus Thermoplasten bestehende Formlinge stabilisiert und durch Erhitzen in inerter Atmosphäre carbonisiert werden, dadurch gekennzeichnet, dass aus Thermoplasten aus der Gruppe Polyphenylenoxid, Polysulfon, Polyethersulfon, Polyetheretherketon bestehende Formlinge zur Stabilisierung mit wenigstens 1 MJ/kg Betastrahlen bestrahlt werden.

2. Verfahren nach Patentanspruch 1, dadurch gekennzeichnet, dass die Energiedosis stufenweise aufgebracht wird.

3. Verfahren nach den Patentansprüchen 1 und 2, dadurch gekennzeichnet, dass die Formlinge mit einer zur vollständigen Vernetzung nicht ausreichenden Energiedosis bestrahlt und anschliessend carbonisiert werden.

4. Verfahren nach den Patentansprüchen 1 bis 3, dadurch gekennzeichnet, dass dem thermoplastischen Kunststoff Kohlenstoffasern zugesetzt werden.

5. Verfahren nach den Patentansprüchen 1 bis 4, dadurch gekennzeichnet, dass der thermoplastische Kunststoff mit einem Verfahren aus der Gruppe Extrudieren, Spritzgiessen geformt wird.

6. Verfahren nach den Patentansprüchen 1 bis 5, dadurch gekennzeichnet, dass mehrere Formlinge durch Ultraschallschweissen verbunden, bestrahlt und carbonisiert werden.

**Claims**

1. Process for the production of vitreous carbon bodies in which shaped blanks consisting of thermoplasts are stabilised and carbonised by heating in inert atmosphere, characterised in that shaped blanks consisting of thermoplasts from the group polyphenyleneoxide, polysulphone, polyethersulphone, polyetheretherketone are irradiated with at least one MJ/kg Beta-irradiation for stabilisation.

2. Process according to claim 1, characterised in that the energy dose is applied in stages.

3. Process according to claims 1 and 2, characterised in that the shaped blanks are irradiated with a dose of energy insufficient for a complete cross-linking and then are carbonised.

4. Process according to claims 1 to 3, characterised in that carbon fibres are added to the thermoplasts.

5. Process according to claims 1 to 4, characterised in that the thermoplasts are shaped by a process from the group extrusion, injection moulding.

6. Process according to claims 1 to 5, characterised in that several shaped blanks are connected by ultrasonic welding, irradiated and carbonised.

**Revendications**

1. Procédé pour obtenir des solides en carbone vitreux pour lequel le moulage consistant en un thermoplastique, est stabilisé et carbonisé par chauffage en atmosphère inerte, caractérisé en ce que les moulages consistant en thermoplastiques, choisis dans le groupe constitué des polyphénylène oxydes, des polysulfones, des polyéthersulfones et des polyéther éthercétones, sont irradiés en vue de la stabilisation avec au moins 1 MJ/kg de rayons Beta.

2. Procédé selon la revendication 1, caractérisé en ce que la dose d'énergie est appliquée par étapes.

3. Procédé selon les revendications 1 et 2, caractérisé en ce que les moulages sont irradiés avec une dose d'énergie insuffisante pour la réticulation complète et finalement carbonisés.

4. Procédé selon les revendications 1 à 3, caractérisé en ce que l'on ajoute aux matières plastiques thermoplastiques des fibres de carbone.

5. Procédé selon les revendications 1 à 4, caractérisé en ce que la matière plastique thermoplastique est mise en forme selon un processus choisi parmi l'extrusion et l'injection.

6. Procédé selon les revendications 1 à 5, caractérisé en ce que des moulages multiples assemblés par soudure aux ultra-sons sont irradiés et carbonisés.